(19) Europäisches Patentamt

European Patent Office

Office européen des brevets

(11) **EP 0 749 000 B1**

(12) **EUROPEAN PATENT SPECIFICATION**

(45) Date of publication and mention
of the grant of the patent:
**24.10.2001 Bulletin 2001/43**

(51) Int Cl.[7]: **G01B 11/06**

(21) Application number: **96304347.6**

(22) Date of filing: **10.06.1996**

(54) **Method and apparatus for color thickness testing**

Verfahren und Vorrichtung für kolorimetrische Dickenmessung

Méthode et appareil pour tester l'épaisseur par voie colorimétrique

(84) Designated Contracting States:
**DE FR GB**

(30) Priority: **16.06.1995 JP 15021495**

(43) Date of publication of application:
**18.12.1996 Bulletin 1996/51**

(73) Proprietor: **INTERNATIONAL BUSINESS
MACHINES CORPORATION
Armonk, NY 10504 (US)**

(72) Inventors:
• **Nakano, Hiroki
Otsu-shi, Shiga-ken (JP)**
• **Fujiwara, Takeshi
Ohtsu-shi, Shiga-ken (JP)**

(74) Representative: **Davies, Simon Robert
I B M
UK Intellectual Property Department
Hursley Park
Winchester, Hampshire SO21 2JN (GB)**

(56) References cited:
**EP-A- 0 101 997        US-A- 4 490 612**

• **PATENT ABSTRACTS OF JAPAN vol. 017, no.
600 (P-1637), 4 November 1993 & JP 05 181125
A (SONY CORP), 23 July 1993,**
• **PATENT ABSTRACTS OF JAPAN vol. 011, no.
201 (P-590), 30 June 1987 & JP 62 022006 A
(MITSUBISHI ELECTRIC CORP), 30 January
1987,**
• **PATENT ABSTRACTS OF JAPAN vol. 007, no.
026 (P-172), 2 February 1983 & JP 57 179607 A
(FUJI DENKI SEIZO KK;OTHERS: 01), 5
November 1982,**

**Description**

The present invention relates to a method for detecting and evaluating the nonuniformity of a color tone of a two-dimensional screen, such as used in a liquid-crystal panel or a television screen for example.

Two-dimensional screens such as a color liquid-crystal panel obtain various color tones by combining three colors of red (R), green (G), and blue (B). For such screens, the nonuniformity of color tones on the screen has to date been visually detected and evaluated.

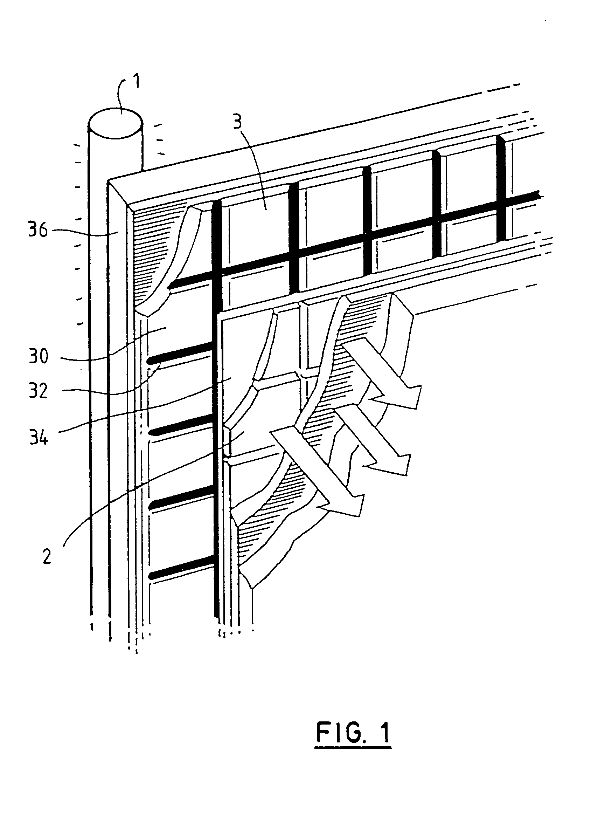

Figure 1 shows how to give a color tone to a liquid-crystal screen. The light source of the liquid-crystal screen uses a backlight 1 using white light. The white light is converted into light having a color tone of R, G, or B for each picture element by setting a color filter 2 having a fine structure and on which picture elements of R, G, and B are alternately arranged in correspondence with light passing through a liquid-crystal injecting portion 3 as shown in Figure 1. Checking for which picture element the light reaches the color filter 2 from the backlight 1 can be performed for each picture element by applying an electric potential to liquid crystal grains injected into the liquid-crystal injecting portion 3 and controlling the transmission and cutoff of the light in accordance with a change of the tilt angle. That is, the liquid crystal injected into the liquid-crystal injecting portion 3 has applied a voltage by a transistor electrode 30 formed on a glass substrate 36 and receives the fluctuation of the tilt angle. The transistor electrode 30 receives power from a power supply line 32.

A color filter is applied onto a glass plate 34 by a method such as dipping, electrocoating, or printing. For example, the dipping method is known in the art for forming a color filter by temporarily dipping the glass plate 34 in a pigment for forming the color filter and then drying the plate 34. In the case of this method, however, nonuniformity of thickness may occur on the margin of the glass plate. Also in the case of the electrocoating and printing methods, nonuniformity of thickness cannot be avoided, although the nonuniformity is not so remarkable as for the case of the dipping method.

A color liquid-crystal screen has the problem that a uniform lightness cannot be obtained for the color tone of the whole screen unless the thickness of the color filter for producing a color tone is uniform over the whole screen. For example, because a portion of a color filter with a thickness larger than the standard thickness has a low light transmittance, the lightness of the portion decreases even if the portion has the same color tone. Moreover, the lightness change is just as detrimental for a person who views the screen as color nonuniformity, because such a person readily perceives the lightness nonuniformity.

The nonuniform state of the lightness of a screen has visually been detected and judged in the prior art by having the whole screen as the color tone of each single color in turn. In the case of the visual method, however, the criterion differs in evaluators and moreover, the criterion depends on the then physical condition of the same evaluator. Furthermore, because the criterion on the degree of nonuniformity becomes an issue, it is not objective, and it is difficult to standardize products. Furthermore, the case may occur in which a nonuniform state of lightness cannot visually be detected in the test, although the nonuniform state actually occurs.

Accordingly, the invention provides a method for inspecting the thickness of a color filter which mainly transmits about a specific wavelength $\lambda_0$ of light, comprising the steps of:

filtering light transmitted through said color filter to a first wavelength displaced by a predetermined wavelength $\Delta\lambda$ from said specific wavelength $\lambda_0$; and
detecting said filtered light;
evaluating thickness uniformity using said detected light.

Preferably said predetermined wavelength ranges between 60 and 140 nm. In the preferred embodiment, the step of evaluating the uniformity of said thickness uses the intensity of said detected light as a parameter, although one might also use a parameter having a correlation with the intensity of said detected light.

In the preferred embodiment, said color filter is formed in conjunction with a screen having a plurality of picture elements arranged on it, and said method further comprises the step of unifying the outputs of said screen into a single color tone if the screen provides multiple colours (eg as for a standard LCD panel). The step of unifying all outputs of said screen into one color tone is preferably executed by masking picture elements other than those with a specific color tone.

In the preferred embodiment, the step of detecting said filtered light is executed for each position on said screen, and the thickness uniformity of said color filter is evaluated by evaluating said light detected for each position on said screen, although some statistical sampling approach could be used instead.

The invention further provides apparatus for evaluating the thickness of a color filter having a central wavelength comprising:

a light source;

means for setting said color filter in the light from the light source;

filtering means for transmitting only the light within a band having a central wavelength displaced by a predetermined wavelength $\Delta\lambda$ from the central wavelength of said color filter; and

means for evaluating the transmitted light within said band.

Viewed from another aspect the invention provides a color filter thickness inspection method for inspecting the thickness of a color filter with a plurality of picture elements arranged on it on a screen provided with a white light source and said color filter, comprising the steps of:

unifying all outputs of said screen into one color tone;

filtering the light emitted from said screen by a filter having a first wavelength deviated by a predetermined wavelength $\Delta\lambda$ from the central wavelength of said one color tone as the central wavelength;

detecting said filtered light; and

evaluating said detected light to evaluate film-thickness uniformity.

Thus a screen is provided with a white light source and a color filter with a plurality of picture elements arranged on it. This can additionally have a monochromatic mask set between the white light source and the color filter to mask picture elements other than those with a specific color tone thereby unifying all outputs of the screen into one color tone. The light emitted from the screen is filtered by a filter having a central pass wavelength (first wavelength) displaced by a predetermined wavelength from the central wavelength of the color tone. The intensity of the filtered light or a parameter correlating with the light intensity is detected and evaluated for each position of the screen by a method such as image processing to thereby evaluate the thickness uniformity of a color filter. The use of image processing for detecting a thickness nonuniformity of a color filter provides more objectivity.

The light to be evaluated passes through a filter having a central pass wavelength displaced by a predetermined wavelength from the central wavelength of the color tone because the dependency of transmittance and hence a parameter such as the light intensity on a film thickness is increased at this displaced wavelength, leading to an improvement of the detection sensitivity.

In passing it is noted that Japanese Patent Publication No. 181125/1993 discloses an apparatus and method using an optical low-pass filter set between an inspection object and an image processor for evaluation. However, this prior embodiment uses the pass filter in order to prevent moire beat, not to select a wavelength area with a high sensitivity.

A preferred embodiment of the invention will now be described in detail by way of example only with reference to the following drawings:

Figure 1 illustrates the positional relation between a white light source and a color filter according to the prior art;

Figure 2 illustrates top views of a color filter and a mask for transmitting only light with a specific color tone;

Figure 3 illustrates typical apparatus for evaluating color filter thickness in accordance with the present invention;

Figure 4 illustrates the dependency between filter thickness change and wavelength intensity change; and

Figure 5 illustrates the transmission characteristic of the filter of Figure 3 for transmitting only a wavelength to be evaluated.

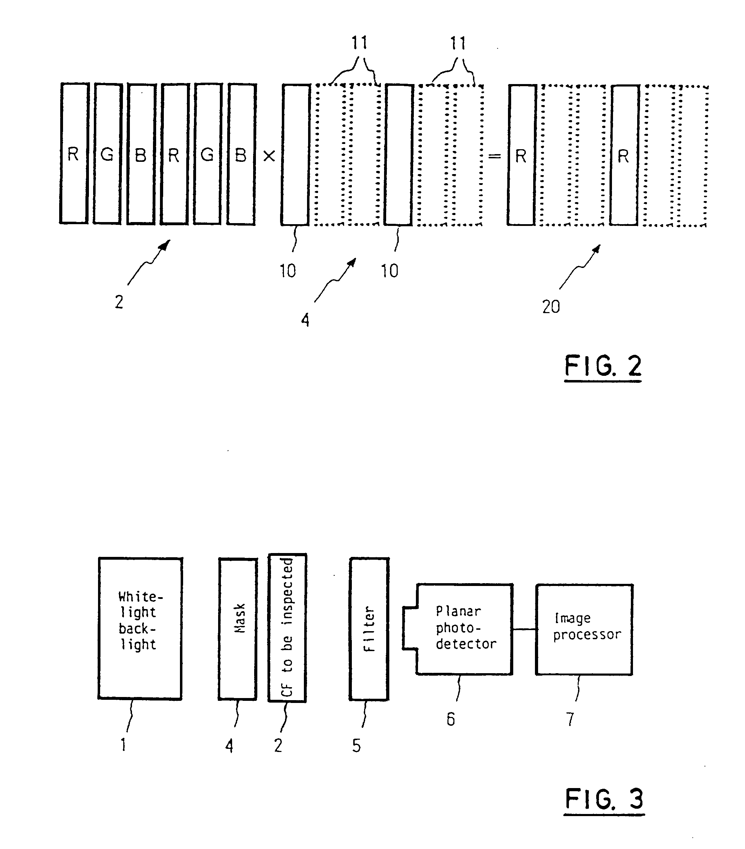

Figure 3 shows an image processing apparatus in which a backlight 1 and a color filter 2 for giving a color tone are used similarly to the case of Figure 1. The color filter 2 is an object to be inspected. A mask 4 is set between the backlight 1 and the color filter 2. The mask 4 is set so as to mask picture elements other than the picture element with a specific color tone as shown in Figure 2. That is, the mask 4 in Figure 3 masks the picture elements 11 shown by a dotted line (Figure 2) of the color filter 5. Therefore, as a result, the light passes only through a picture element 10 shown by a continuous line. For example, because the picture element shown by the continuous line corresponds to the position of R of the color filter 2 in Figure 2, the whole screen 20 has a color tone of red in this case. Therefore, it is possible to evaluate the thickness uniformity of a color filter with the same color tone by unifying the whole screen into one color tone for inspection. Moreover, it is possible to know the thickness uniformity of a color filter with the same color tone by using the fact that the intensity of the wavelength of the light passing through the color filter correlates to the thickness of the color filter.

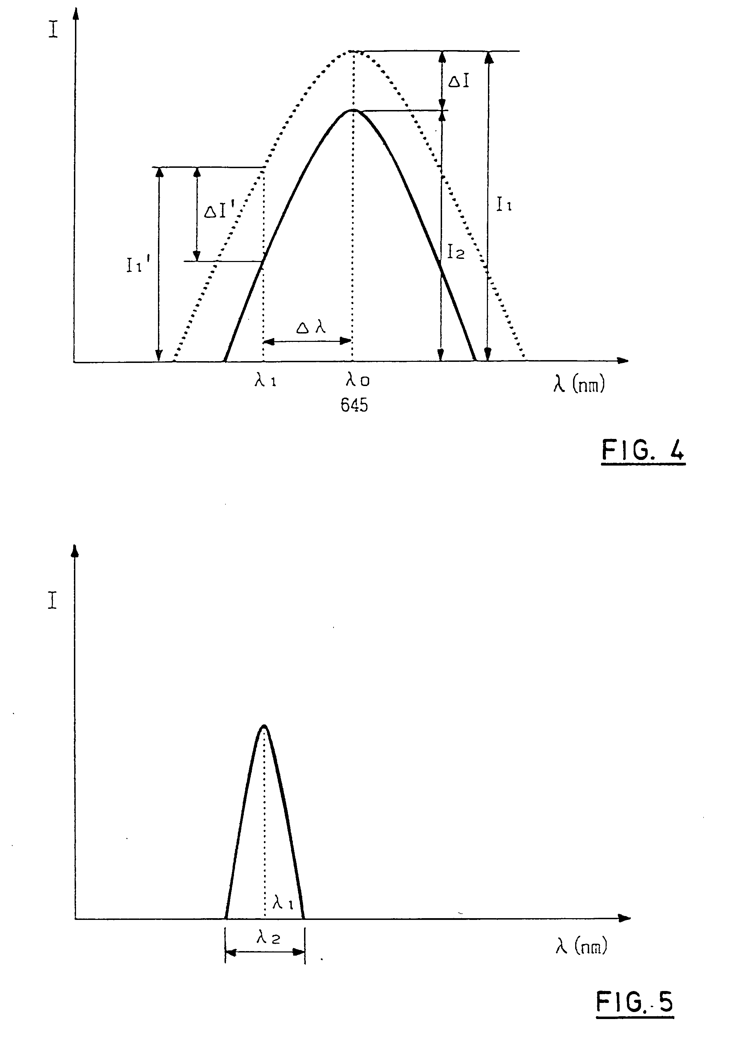

The present invention uses the intensity of a wavelength displaced from the central wavelength of light with the same color tone as the filter to obtain the correlation between light intensity and color filter thickness. Light with the same color tone (e.g. R) comprises not a single wavelength but a wavelength having a certain distribution. For example, in the case of the distribution of light intensity with wavelength for the light passing through a filter of R as shown by a continuous line in Figure 4, the central wavelength is 645 nm and a distribution of approximately 150 to 200 nm is present on either side of the central wavelength. The present invention is characterized by using light passing through a color filter having a peripheral wavelength $\lambda_1$ displaced by $\Delta\lambda$ from the central wavelength $\lambda_0$ as the wavelength to detect the positional distribution of light intensity on a screen and so to evaluate the thickness uniformity of the filter.

As described above, because the positional distribution of light intensity on the screen is detected by using the transmitted light mainly comprising the peripheral wavelength $\lambda_1$ which is displaced from the central wavelength $\lambda_0$, another filter 5 is set ahead of the color filter 2. The filter 5 transmits only a wavelength in a certain range centered on the wavelength $\lambda_1$ (referred to as a peripheral wavelength), which is displaced by a predetermined wavelength $\Delta\lambda$ from the central wavelength $\lambda_0$ of the color tone (R for this example) of a picture element to be inspected.

Figure 5 shows a distribution of wavelengths passing through a filter having the peripheral wavelength $\lambda_1$ as the central transmission wavelength. Though it is preferable to set the width $\lambda_2$ of the wavelength of the transmission characteristic of the filter shown in Figure 5 to approx. 100 nm, the width $\lambda_2$ is not very strictly limited. A width range of 20 to 200 nm is suitable for achieving reasonable measurements. The light with the color tone of R having the distribution shown in Figure 4 and filtered by the filter 5 having the above transmission characteristic is used to evaluate a color filter thickness. In the preferred embodiment, a planar photodetector 6 detects light corresponding to a position on a screen and an image processor 7 evaluates the distribution of the light intensity.

The theory of image processing is described below by referring to Figure 4. This theory uses the fact that the sensitivity of a relative value of a light intensity change depending on the thickness of a color filter increases for the peripheral wavelength $\lambda_1$ displaced from the central wavelength $\lambda_0$.

In Figure 4, the broken line shows the dependency between wavelength and light intensity for a color filter thickness of 1μm and the continuous line shows the dependency between wavelength and light intensity for a color filter thickness of 2μm. When the filter thickness increases from 1 to 2μm, the intensity I1 of light at the central wavelength $\lambda_0$ decreases by $\Delta$I and results in I2. However, the rate of change of the light intensity (dependency between filter thickness and light intensity) $\Delta$I/I1 is not very large because I1 is large. That is, the dependency between filter thickness and light intensity is relatively small for the central wavelength $\lambda_0$. However, when the filter thickness similarly changes from 1 to 2μm for the peripheral wavelength $\lambda_1$ separated by $\Delta\lambda$ from the central wavelength $\lambda_0$, the change rate $\Delta$I'/I1' of intensity becomes relatively large because I1' is small. Therefore, the dependency between filter thickness and light intensity is relatively large for a peripheral wavelength. Thus, by performing the evaluation in a wavelength area with a relatively large dependency between filter thickness and light intensity, the evaluation sensitivity can be improved. Specifically, a change rate is measured by using a filter having the above wavelength area as the central wavelength.

Table 1 shows the correlation between specific wavelength and transmittance (τ) for each filter thickness. In this case, the transmittance (τ) is an index corresponding to light intensity, which is defined by the following expression.

$$\tau = I/I0 = \exp(-\mu d)$$

Where,

I:     Light intensity filtered
I0:     Light intensity not filtered
μ:     Absorption coefficient
d:     Filter thickness

Because the absorption coefficient μ depends on the material of a color filter, it is constant for color filters distributed on one plane. Therefore, because the transmittance τ correlates to the filter thickness d, it is possible to evaluate the fluctuation of filter thickness by evaluating the transmittance τ. This embodiment defines and uses transmittance as a parameter depending on a filter thickness. However, any other parameter such as light intensity or the like can be used as long as it depends on filter thickness.

[Table 1]

| | | Transmittance (%) | | |
|---|---|---|---|---|
| | Wavelength | Filter thickness of 1μm | Filter thickness of 2μm | Change rate |
| | (nm) | (I1) | (I2) | ($\Delta$I/I1) |
| Center | 640 | 87.5 | 76.6 | 0.05 |
| Margin | 600 | 40.7 | 35.7 | 0.12 |

[Table 1]   (continued)

| Transmittance (%) | | | | |
|---|---|---|---|---|
| | Wavelength | Filter thickness of 1μm | Filter thickness of 2μm | Change rate |
| | (nm) | (I1) | (I2) | (ΔI/I1) |
| Margin | 580 | 20.7 | 13.5 | 0.35∗ |
| Margin | 560 | 15.5 | 8.6 | 0.45∗ |
| Margin | 540 | 14.9 | 5.7 | 0.62∗ |
| Margin | 470 | 8.1 | Difficult to detect | - |

Symbol "∗" represents the most suitable central wavelengths for the filter 5 of Figure 3. As shown in Table 1, the transmittance (having the correlation with light intensity) of light when the filter thickness changes from 1 to 2μm changes by only 5% for the central wavelength of 640 nm of R. Therefore, the central wavelength $\lambda_0$ cannot practically be used as a wavelength for detecting the correlation between light intensity and filter thickness because its detection sensitivity is too low. This also applies to 600 nm in the case of Δλ=40 nm. When the filter thickness changes from 1 to 2μm, the light transmittance changes only by 12% and the dependency between the filter thickness and the light transmittance is not remarkable.

However, in the case of 540 nm for Δλ=100 nm, the change of the light transmittance reaches approx. 60% as the filter thickness increases from 1 to 2μm and thereby, it is found that the light transmittance (or light intensity) adequately changes in this wavelength area as the filter thickness changes. Therefore, by using a wavelength displaced by a certain wavelength from the central wavelength as the wavelength to be evaluated, it is possible to perform evaluation at a high sensitivity. when using a filter having a wavelength of Δλ=60 nm (ie at 580 nm) as the central wavelength, the change rate comes to approx. 35%, and the change rate comes to 45% in the case of Δλ=80 nm (ie at 560 nm). In the case of this example, by controlling a computing system, adequate improvement of the sensitivity can be expected even for Δλ=60 nm.

However, if the difference Δλ between a central wavelength and a peripheral wavelength is too large, the absolute intensity of light decreases and detection and evaluation by the photodetector 6 and image processor 7 becomes rather difficult due to noise. Therefore, it is difficult to detect the data for the filter thickness of 2μm when Δλ equals Δλ=170 nm or (ie $\lambda_1$ equals 470 nm) because of the above reason, as shown in Table 1. Thus, it is necessary to determine a peripheral wavelength used for detection and evaluation by considering two aspects, the dependency between filter thickness and light intensity and the absolute intensity of detected light, which are contrary to each other. It is preferable to use a peripheral wavelength of Δλ=±60 to ±140 nm.

Table 2 shows the dependency of change of transmittance when changing wavelengths and filter thicknesses for a central wavelength of $\lambda_0$=540 nm (G). In Table 2, symbol "∗" represents the most suitable wavelengths for testing purposes.

[Table 2]

| Transmittance (%) | | | | |
|---|---|---|---|---|
| | Wavelength | Filter thickness of 1μm | Filter thickness of 2μm | Change rate |
| | (nm) | (I1) | (I2) | (ΔI/I1) |
| Center | 540 | 79.2 | 75.0 | 0.05 |
| Margin | 490 | 33.3 | 25.2 | 0.24 |
| Margin | 460 | 17.5 | 10.5 | 0.40∗ |
| Margin | 440 | 10.2 | 4.1 | 0.60∗ |
| Margin | 590 | 38.4 | 28.8 | 0.25 |
| Margin | 620 | 10.3 | 5.0 | 0.51∗ |

Similarly to the case of R, the sensitivity is improved for Δλ=100 nm. In the case of this example, however, even a displacement of Δλ= approximately 80 nm is enough to provide reasonable detection sensitivity. In the case of G, the same improvement of the sensitivity can be expected irrespective of whether the displacement from the central wavelength occurs on the small wavelength side or large wavelength side, as shown in Table 2.

Table 3 shows the result of performing the same measurement for B with the central wavelength of $\lambda_0$=430 nm. In Table 3, symbol "∗" represents the most suitable wavelengths for testing purposes.

[Table 3]

| Transmittance (%) | | | | |
|---|---|---|---|---|
| | Wavelength | Filter thickness of 1μm | Filter thickness of 2μm | Change rate |
| | (nm) | (I1) | (I2) | (ΔI/I1) |
| Center | 430 | 86.8 | 72.9 | 0.16 |
| Margin | 490 | 65.0 | 50.7 | 0.22 |
| Margin | 510 | 42.0 | 27.3 | 0.35∗ |
| Margin | 530 | 27.6 | 8.6 | 0.69∗ |

In this case, the detection sensitivity at the position of $\Delta\lambda$=100 nm is particularly suitable, although considerable improvement of the sensitivity can be expected even for $\Delta\lambda$=80 nm.

Thus a high-sensitivity measurement may be achieved by using the filter 5 having a central wavelength shown in Tables 1 to 3 for R, G, and B respectively and thereby filtering the light emitted from a monochromatic screen. The filter typically should have a bandwidth $\lambda_2$ in the range 20 to 200 nm.

Thus a color filter can have its thickness evaluated at a high sensitivity by passing light having wavelengths distributed about a certain wavelength $\lambda_0$ through a filter having a central wavelength at the position of $\lambda_1$ displaced by $\Delta\lambda$ from the central wavelength $\lambda_0$ and using the transmitted light in order to evaluate the thickness uniformity of the filter.

Using such an approach it is possible to quantitatively evaluate the thickness uniformity of a color filter with an objective method based on image processing, compared to the prior art visual inspection of thickness uniformity. Moreover, because a wavelength displaced by a certain wavelength from the central wavelength of the color tone of the color filter for evaluation is used as the wavelength to be evaluated, a filter thickness change is detected at a high sensitivity and an accurate evaluation can be performed.

## Claims

1. A method for inspecting the thickness of a color filter (2) which mainly transmits about a specific wavelength $\lambda_0$ of light, comprising the steps of:

   filtering light transmitted through said color filter to a first wavelength displaced by a predetermined wavelength $\Delta\lambda$ from said specific wavelength $\lambda_0$; and
   detecting said filtered light;
   evaluating thickness uniformity using said detected light.

2. The method of claim 1, wherein said predetermined wavelength ranges between 60 and 140 nm.

3. The method of any preceding claim, wherein the step of evaluating the uniformity of said thickness uses the intensity of said detected light as a parameter.

4. The method of claim 1 or 2, wherein the step of evaluating the uniformity of said thickness uses a parameter having a correlation with the intensity of said detected light.

5. The method of any preceding claim, wherein said color filter is formed in conjunction with a screen having a plurality of picture elements arranged on it, and said method further comprises the step of unifying the outputs of said screen into a single color tone.

6. The method of claim 5, wherein the step of unifying all outputs of said screen into one color tone is executed by masking picture elements other than those with a specific color tone.

7. The method of claim 5 or 6, wherein the step of detecting said filtered light is executed for each position on said screen.

8. The method of claim 7, wherein the thickness uniformity of said color filter is evaluated by evaluating said light detected for each position on said screen.

**9.** Apparatus for evaluating the thickness of a color filter having a central wavelength comprising:

a light source (1);
means for setting said color filter in the light from the light source;
filtering means (5) for transmitting only the light within a band having a central wavelength displaced by a predetermined wavelength $\Delta\lambda$ from the central wavelength of said color filter; and
means (6, 7) for evaluating the transmitted light within said band.

**10.** The apparatus of claim 9, wherein said $\Delta\lambda$ ranges between 60 and 140 nm.


**Patentansprüche**

**1.** Verfahren zum Überprüfen der Dicke eines Farbfilters (2), das hauptsächlich eine spezifische Lichtwellenlänge $\lambda_0$ durchlässt, mit den Schritten:

Filtern von Licht, das durch das Farbfilter transmittiert wird, auf eine erste Wellenlänge, die um eine vorgegebene Wellenlänge $\Delta\lambda$ gegenüber der spezifischen Wellenlänge $\lambda_0$ versetzt ist; und

Detektieren des gefilterten Lichts;

Bestimmen der Gleichmäßigkeit der Dicke unter Verwendung des detektierten Lichts.

**2.** Verfahren nach Anspruch 1, wobei die vorgegebene Wellenlänge im Bereich zwischen 60 nm und 140 nm liegt.

**3.** Verfahren nach irgendeinem vorhergehenden Anspruch, wobei der Schritt des Bestimmens der Gleichmäßigkeit der Dicke die Intensität des detektierten Lichts als einen Parameter verwendet.

**4.** Verfahren nach Anspruch 1 oder 2, wobei der Schritt des Bestimmens der Gleichmäßigkeit der Dicke einen Parameter mit einer Korrelation zu der Intensität des detektierten Lichts verwendet.

**5.** Verfahren nach irgendeinem vorhergehenden Anspruch, wobei das Farbfilter in Verbindung mit einem Bildschirm ausgebildet ist, auf dem eine Mehrzahl von Bildelementen angeordnet ist, und das Verfahren des Weiteren den Schritt umfasst, die Ausgangssignale des Bildschirms auf einen einzigen Farbton zu vereinheitlichen.

**6.** Verfahren nach Anspruch 5, wobei der Schritt der Vereinheitlichung aller Ausgangssignale des Bildschirms auf einen Farbton durch Maskieren von Bildelementen ausgeführt wird, die einen anderen als den spezifischen Farbton aufweisen.

**7.** Verfahren nach Anspruch 5 oder 6, wobei der Schritt des Detektierens des gefilterten Lichts für jede Position auf dem Bildschirm ausgeführt wird.

**8.** Verfahren nach Anspruch 7, wobei die Gleichmäßigkeit der Dicke des Farbfilters durch Auswerten des Lichts bestimmt wird, das für jede Position auf dem Bildschirm detektiert wird.

**9.** Vorrichtung zum Bestimmen der Dicke eines Farbfilters mit einer zentralen Wellenlänge, die beinhaltet:

eine Lichtquelle (1);

Mittel zum Einsetzen des Farbfilters in das Licht von der Lichtquelle;

Filtermittel (5), um lediglich das Licht innerhalb eines Bandes mit einer zentralen Wellenlänge zu transmittieren, die um eine vorgegebene Wellenlänge $\Delta\lambda$ gegenüber der zentralen Wellenlänge des Farbfilters versetzt ist; und

Mittel (6, 7) zum Auswerten des innerhalb des Bandes transmittierten Lichts.

**10.** Vorrichtung nach Anspruch 9, wobei $\Delta\lambda$ im Bereich zwischen 60 nm und 140 nm liegt.

**EP 0 749 000 B1**

**Revendications**

1. Procédé destiné à examiner l'épaisseur d'un filtre de couleur (2) qui transmet principalement aux environs d'une longueur d'onde spécifique $l_0$ de la lumière, comprenant les étapes consistant à :

   filtrer la lumière transmise au travers dudit filtre de couleur à une première longueur d'onde décalée d'une longueur d'onde prédéterminée Dl par rapport à ladite longueur d'onde spécifique $l_0$, et

   détecter ladite lumière filtrée,

   évaluer l'uniformité de l'épaisseur en utilisant ladite lumière détectée.

2. Procédé selon la revendication 1, dans lequel ladite longueur d'onde prédéterminée est dans une plage entre 60 et 140 nm.

3. Procédé selon l'une quelconque des revendications précédentes, dans lequel l'étape d'évaluation de l'uniformité de ladite épaisseur utilise l'intensité de ladite lumière détectée en tant que paramètre.

4. Procédé selon la revendication 1 ou 2, dans lequel l'étape d'évaluation de l'uniformité de ladite épaisseur utilise un paramètre présentant une corrélation avec l'intensité de ladite lumière détectée.

5. Procédé selon l'une quelconque des revendications précédentes, dans lequel ledit filtre de couleur est formé conjointement à un écran comportant une pluralité d'éléments d'image disposés sur celui-ci, et ledit procédé comprend en outre l'étape d'unification des sorties dudit écran en une seule teinte de couleur.

6. Procédé selon la revendication 5, dans lequel l'étape d'unification de toutes les sorties dudit écran en une teinte de couleur est exécutée en masquant les éléments d'image autres que ceux présentant une teinte de couleur spécifique.

7. Procédé selon la revendication 5 ou 6, dans lequel l'étape de détection de ladite lumière filtrée est exécutée pour chaque position sur ledit écran.

8. Procédé selon la revendication 7, dans lequel l'uniformité de l'épaisseur dudit filtre de couleur est évaluée en évaluant ladite lumière détectée pour chaque position sur ledit écran.

9. Appareil destiné à évaluer l'épaisseur d'un filtre de couleur présentant une longueur d'onde centrale comprenant :

   une source de lumière (1),

   un moyen destiné à installer ledit filtre de couleur dans la lumière provenant de la source de lumière,

   un moyen de filtrage (5) destiné à transmettre uniquement la lumière à l'intérieur d'une bande présentant une longueur d'onde centrale décalée d'une longueur d'onde prédéterminée D1 par rapport à la longueur d'onde centrale dudit filtre de couleur, et

   un moyen (6, 7) destiné à évaluer la lumière transmise à l'intérieur de ladite bande.

10. Appareil selon la revendication 9, dans lequel ladite valeur D1 est dans une plage entre 60 et 140 nm.

FIG. 1

_FIG. 2_

_FIG. 3_

FIG. 4

FIG. 5